# EUROPEAN PATENT SPECIFICATION

(11) **EP 4 206 514 B1**
(45) Date of publication and mention of the grant of the patent: **08.05.2024**
(21) Application number: 22192802.1
(22) Date of filing: 30.08.2022
(51) Int. Cl.: F16M 11/04

(54) **CARRYING DEVICE**
TRAGEVORRICHTUNG
DISPOSITIF DE TRANSPORT

(30) Priority: 30.12.2021 TW 110149516
(43) Date of publication of application: 05.07.2023
(73) Proprietor: Wistron NeWeb Corporation, Hsinchu 30844 (TW)
(72) Inventor: CHOU, Kai-Hsiang, 30844 HSINCHU (TW); CHANG, Jen-Yung, 30844 HSINCHU (TW); HUANG, Bau-Yi, 30844 HSINCHU (TW); CHANG, Feng-Ming, 30844 HSINCHU (TW)
(74) Representative: Viering, Jentschura & Partner mbB Patent- und Rechtsanwälte

(56) References cited:
- US-A1- 2018 045 231
- US-B1- 6 398 175

## Description

### FIELD OF THE DISCLOSURE

The present disclosure relates to a carrying device, and more particularly to a carrying device having more than one clamping mode.

### BACKGROUND OF THE DISCLOSURE

US 6398175 B1 discloses a hand-held laser detector clamp apparatus. The hand-held laser detector clamp apparatus is provided for use in attachment against virtually all available sizes and shapes of members found on construction sites and in surveying applications. A reversible jaw adapter that contains both a "flat" face and a "ramped" face is attached to a travelling clamp jaw with a clamp lead screw. The reversible jaw adapter can be used with either its flat face out or its ramped face out. A detector bracket and detector screw are also provided as part of the clamp apparatus to hold a hand-held laser detector in place. If the flat face of the reversible jaw adapter is oriented so as to be "out," then the clamp apparatus will generally be most useable in attaching to flat surfaces, such as rectangular rods or boards. When the ramped face of the reversible jaw adapter is "out," then the clamp apparatus can be used for attachment against a variety of different member shapes, such as round rods, oval rods, and certain sizes of rectangular rods. To use the reversing feature of the clamp apparatus, the travelling clamp jaw is backed away using the clamp lead screw from whatever surface or member that the clamp apparatus is presently attached against. After the clamp apparatus has become free, the adapter screw is loosened to an extent that the reversible jaw adapter becomes free from the travelling clamp jaw. After that has occurred, the orientation of the reversible jaw adapter is manually reversed, then the adapter screw is tightened to hold the reversible jaw adapter in place against the travelling clamp jaw. Now the clamp apparatus is ready for use in clamping against a different size or shape of member.

A further embodiment of a clamping device for continuous adjustment of a display stand is known from US 2018/0045231 A1.

A conventional carrying device includes a stand and two clamps that are assembled to and movable relative to the stand. The two clamps of the conventional carrying device can fix to and clamp a certain structure therebetween, so that an object assembled to the conventional carrying device can be hung from the structure through the conventional carrying device. However, the conventional carrying devices have been limited to the existing structural design, and so it is difficult to alter the design for further improvements.

### SUMMARY OF THE DISCLOSURE

In response to the above-referenced technical inadequacies, the present disclosure provides a carrying device according to independent claims 1 and 10 to effectively improve on the issues associated with conventional carrying devices. The dependent claims show further embodiments of claims 1 and 10.

In one aspect, the present disclosure provides a carrying device, which includes a stand, an upper clamp, a lower clamp, a manipulation mechanism, and a supporting column. The stand has a track structure and is configured to allow an object to be detachably assembled thereon. The upper clamp is connected to the stand. The lower clamp is assembled to the track structure and faces toward the upper clamp. The lower clamp is movable along the track structure relative to the upper clamp, and the upper clamp and the lower clamp jointly define a receiving space therebetween. The manipulation mechanism is assembled to the stand and is interlinked with the lower clamp. The manipulation mechanism is configured to drive the lower clamp to move along the track structure. The supporting column is assembled to the lower clamp. The supporting column is movable relative to the lower clamp, so that the carrying device is adjustable to be in a first clamping mode or a second clamping mode. When the carrying device is in the first clamping mode, the supporting column is located in the receiving space, a free end portion of the supporting column faces toward the upper clamp, and the manipulation mechanism is configured to drive the lower clamp and the supporting column to move together, so that the free end portion and the upper clamp are capable of jointly clamping a plate part of a first structure. Moreover, when the carrying device is in the second clamping mode, the supporting column is located outside of the receiving space, the receiving space is configured to receive a second structure being plate-shaped, and the manipulation mechanism is configured to drive the lower clamp to move, so that the lower clamp and the upper clamp are capable of jointly clamping the second structure, and wherein a thickness of the plate part of the first structure capable of being clamped by the carrying device in the first clamping mode is less than a thickness of the second structure capable of being clamped by the carrying device in the second clamping mode.

In another aspect, the present disclosure provides a carrying device, which includes a stand, an upper clamp, a lower clamp, a manipulation mechanism, and a supporting column. The stand has a track structure and is configured to allow an object to be detachably assembled thereon. The upper clamp is connected to the stand. The lower clamp is assembled to the track structure and faces toward the upper clamp. The lower clamp is movable along the track structure relative to the upper clamp, and the upper clamp and the lower clamp jointly define a receiving space therebetween. The manipulation mechanism is assembled to the stand and is interlinked with the lower clamp. The manipulation mechanism is configured to drive the lower clamp to move along the track structure. The supporting column is detachably assembled to the lower clamp and is located in the receiving space, so that the carrying device is in a first clamping mode. Moreover, a free end portion of the supporting column faces toward the upper clamp, and the manipulation mechanism is configured to drive the lower clamp and the supporting column to move together, so that the free end portion and the upper clamp are capable of jointly clamping a plate part of a first structure. Moreover, when the supporting column is detached from the lower clamp, the carrying device is in a second clamping mode, the receiving space is configured to receive a second structure being plate-shaped, and the manipulation mechanism is configured to drive the lower clamp to move, so that the lower clamp and the upper clamp are capable of jointly clamping the second structure. Furthermore, a thickness of the plate part of the first structure capable of being clamped by the carrying device being in the first clamping mode is less than a thickness of the second structure capable of being clamped by the carrying device being in the second clamping mode.

Therefore, the supporting column and the upper clamp of the carrying device in the present disclosure can cooperate with each other to jointly clamp the first structure by moving or assembling the supporting column into the receiving space, so that a moving distance of the lower clamp can be effectively decreased (e.g., the moving distance of the lower clamp can be substantially decreased by a length of the supporting column), and a manipulation time of the manipulation mechanism can be significantly reduced. Accordingly, the carrying device provided by the present disclosure can be different from the existing structure.

The invention is set out in the appended set of claims.

These and other aspects of the present disclosure will become apparent from the following description of the embodiment taken in conjunction with the following drawings and their captions, although variations and modifications therein may be affected without departing from the scope of the novel concepts of the disclosure.

### BRIEF DESCRIPTION OF THE DRAWINGS

The described embodiments may be better understood by reference to the following description and the accompanying drawings, in which:
FIG. 1 is a perspective view of a carrying device being in a second clamping mode according to a first embodiment of the present disclosure;
FIG. 2 is an exploded view of FIG. 1;
FIG. 3 is a perspective view showing the carrying device of FIG. 1 in process to switch clamping mode;
FIG. 4 is a perspective view of the carrying device being in a first clamping mode according to the first embodiment of the present disclosure;
FIG. 5 is a planar view of FIG. 4;
FIG. 6 and FIG. 7 are planar views showing the carrying device that is in the first clamping mode and that is used to clamp a first structure;
FIG. 8 is a perspective view of the carrying device being in the first clamping mode and having another configuration according to the first embodiment of the present disclosure;
FIG. 9 is a planar view showing the carrying device that is in the second clamping mode and that is used to clamp a second structure;
FIG. 10 is a perspective view of the carrying device being in the first clamping mode according to a second embodiment of the present disclosure;
FIG. 11 is a perspective view of the carrying device being in the second clamping mode according to the second embodiment of the present disclosure;
FIG. 12 is a perspective view of the carrying device being in the first clamping mode according to a third embodiment of the present disclosure; and
FIG. 13 is a perspective view of the carrying device being in the second clamping mode according to the third embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

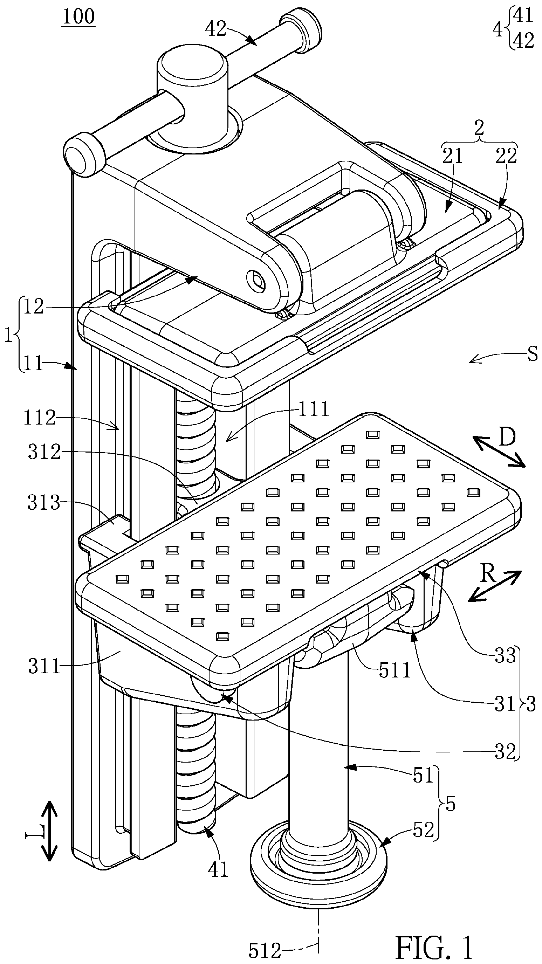

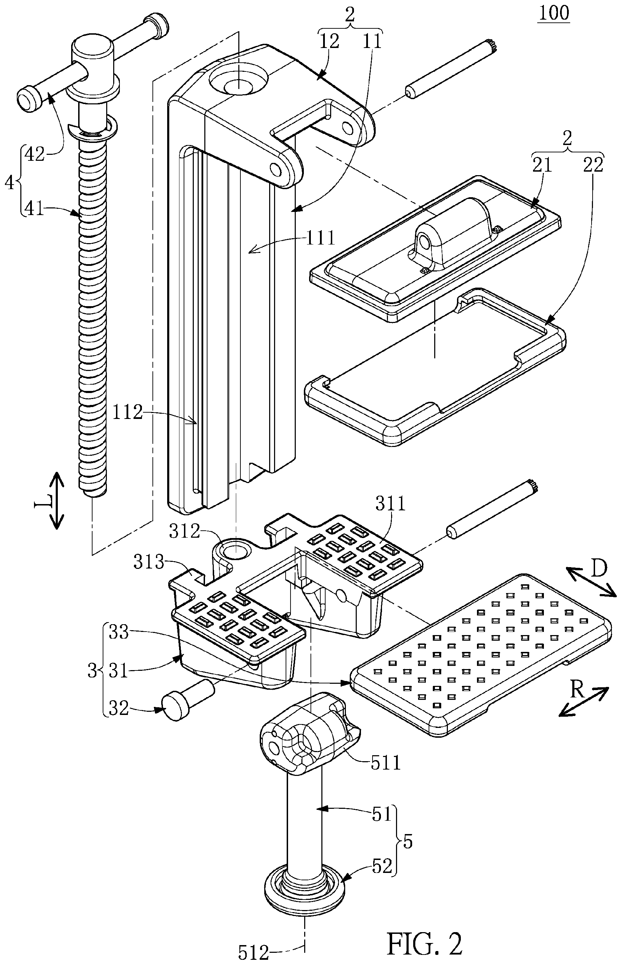

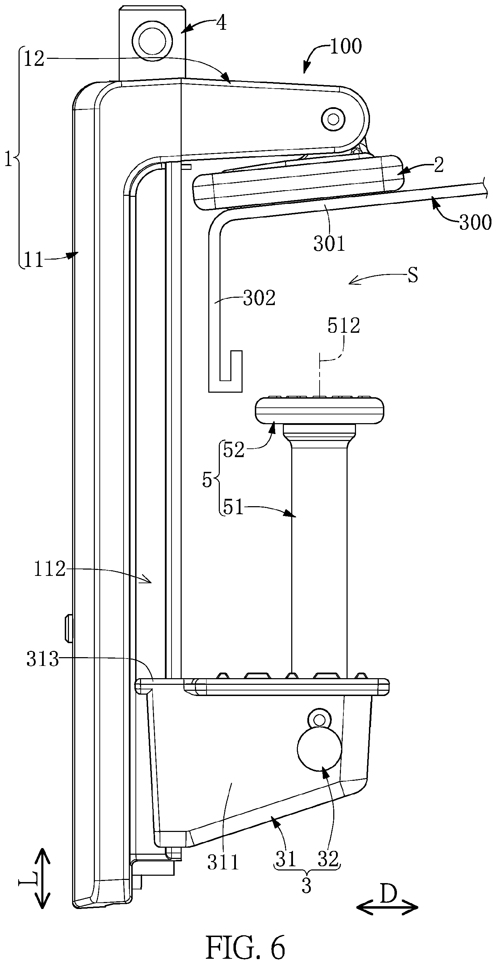

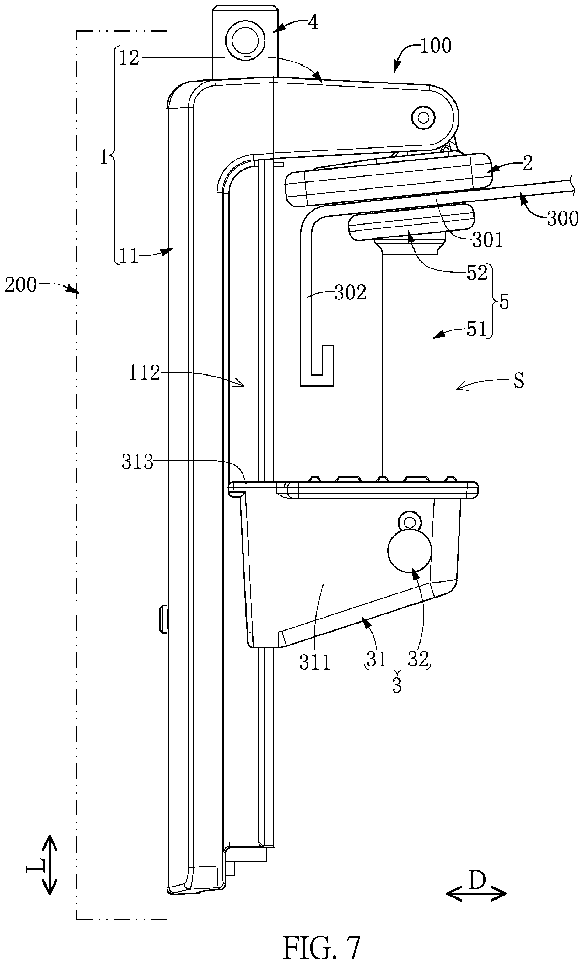

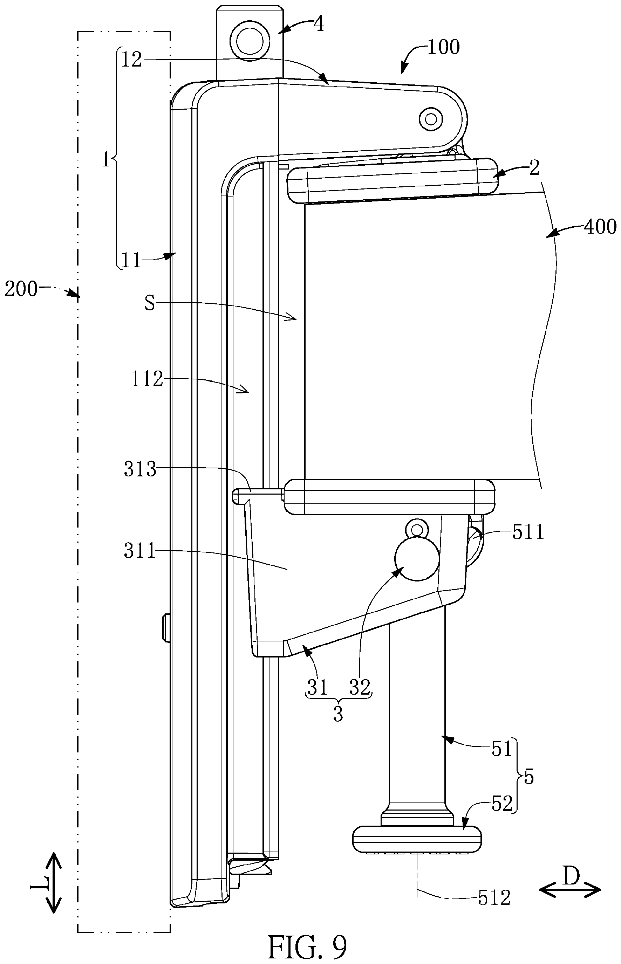

Referring to FIG. 1 to FIG. 9, a first embodiment of the present disclosure provides a carrying device 100 configured to allow an obj ect 200 to be detachably assembled thereon (as shown in FIG. 7 and FIG. 9). The carrying device 100 is configured to selectively clamp one of a first structure 300 (shown in FIG. 7) and a second structure 400 (as shown in FIG. 9) that is different from the first structure 300. The first structure 300 includes a plate part 201 and an extension part 302 that curvedly (e.g., perpendicularly) extends from the plate part 301, and the second structure 400 is in a block shape, a strip shape, or a platy shape. In the present embodiment, a thickness of the first structure 300 is less than a thickness of the second structure 400. Specifically, the thickness of the first structure 300 is less than 10 mm, and the thickness of the second structure 400 is within a range from 30 mm to 40 mm, but the present disclosure is not limited thereto.

It should be noted that the carrying device 100 in the present embodiment is implemented in an outdoor environment, the first structure 300 and the second structure 400 are windowsills having different configurations, and the object 200 is a customer premise equipment (CPE), but the present disclosure is not limited thereto.

As shown in FIG. 1 to FIG. 5, the carrying device 100 includes a stand 1, an upper clamp 2 connected to the stand 1, a lower clamp 3 assembled to the stand 1, a manipulation mechanism 4 assembled to the stand 1 and interlinked with the lower clamp 3, and a supporting column 5 that is assembled to the lower clamp 3.

In the present embodiment, as shown in FIG. 1, FIG. 2, and FIG. 5, the stand 1 is a substantially L-shaped structure and is configured to allow the object 200 to be detachably assembled thereon, and the stand 1 preferably includes a track structure 11 and an assembling portion 12 that is perpendicularly connected to the track structure 11, but the present disclosure is not limited thereto. A longitudinal direction of the track structure 11 is parallel to a straight direction L, and the track structure 11 includes an inner channel 111 and two outer tracks 112 that are respectively arranged at two opposite sides of the inner channel 111.

The upper clamp 2 is pivotally connected to the assembling portion 12 of the stand 1 and is substantially located at an inner side of the stand 1. The upper clamp 2 includes an upper seat 21 and an upper antiskid pad 22 that is assembled to the upper seat 21. The upper seat 21 is pivotally connected to the stand 1 (e.g., the assembling portion 12) along a shaft direction R perpendicular to the track structure 11 (or the straight direction L), and the upper antiskid pad 22 faces toward the lower clamp 3.

Specifically, the upper seat 21 is pivotally rotatable relative to the assembling portion 12 so as to adjust an angle therebetween. The upper antiskid pad 22 is substantially in a sheet-shape, and is detachably assembled to and covers the upper seat 21. The upper antiskid pad 22 has a plurality of protrusions arranged on a bottom surface thereof. When the bottom surface of the upper antiskid pad 22 is substantially perpendicular to the straight direction L, the upper antiskid pad 22 and the track structure 11 are spaced apart from each other by a first reserved distance D1 along a depth direction D that is perpendicular to the straight direction L and the shaft direction R.

The lower clamp 3 is assembled to the track structure 11 (e.g., the two outer tracks 112) and faces toward the upper clamp 2, so that the lower clamp 3 is movable along the track structure 11 relative to the upper clamp 2, and the upper clamp 2 and the lower clamp 3 jointly define a receiving space S therebetween.

The lower clamp 3 in the present embodiment includes a lower seat 31, a retainer 32 (e.g., a pin or a bolt) assembled to the lower seat 31, and a lower antiskid pad 33 that is assembled to the lower seat 31, but the present disclosure is not limited thereto. For example, in other embodiments of the present disclosure, the lower clamp 3 can be provided by omitting at least one of the retainer 32 and the lower antiskid pad 33 according to design requirements.

Specifically, the lower seat 31 in the present embodiment includes a main portion 311, an interlinked portion 312 connected to the main portion 311, and two sliding portions 313 that are connected to the main portion 311 and that are respectively arranged at two opposite sides of the interlinked portion 312. The interlinked portion 312 is arranged in the inner channel 111, and the two sliding portions 313 are respectively and slidably arranged in the two outer tracks 112 along the straight direction L, so that the lower seat 31 is assembled to the track structure 11, but the present disclosure is not limited thereto.

Moreover, the lower antiskid pad 33 is substantially in a sheet-shape, and is detachably assembled to and covers the main portion 311. The lower antiskid pad 33 has a plurality of protrusions arranged on a top surface thereof. The lower antiskid pad 33 faces toward the upper clamp 2 (e.g., the upper antiskid pad 22), the top surface of the lower antiskid pad 33 is substantially perpendicular to the straight direction L, and the lower antiskid pad 33 and the track structure 11 are spaced apart from each other along the depth direction D by a distance that is substantially equal to the first reserved distance D1.

The manipulation mechanism 4 is interlinked with the lower seat 31 of the lower clamp 3, so that the manipulation mechanism 4 can be configured to drive the lower clamp 3 to move along the track structure 11 (or the straight direction L). The lower clamp 3 is movable in a direction away from the upper clamp 2 through the manipulation mechanism 4 so as to enable the lower clamp 3 to be spaced apart from the upper clamp 2 by a maximum distance Dmax.

Specifically, the manipulation mechanism 4 includes a screw rod 41 and a manipulation rod 42 that is connected to the screw rod 41. The screw rod 41 passes through the stand 1 and is arranged in the inner channel 111, and is screwed to the lower seat 31 (e.g., the interlinked portion 312). The manipulation rod 42 is arranged adjacent to the assembling portion 12, and is configured to rotate the screw rod 41 so as to allow the lower seat 31 to move in a fixed interval along the track structure 11.

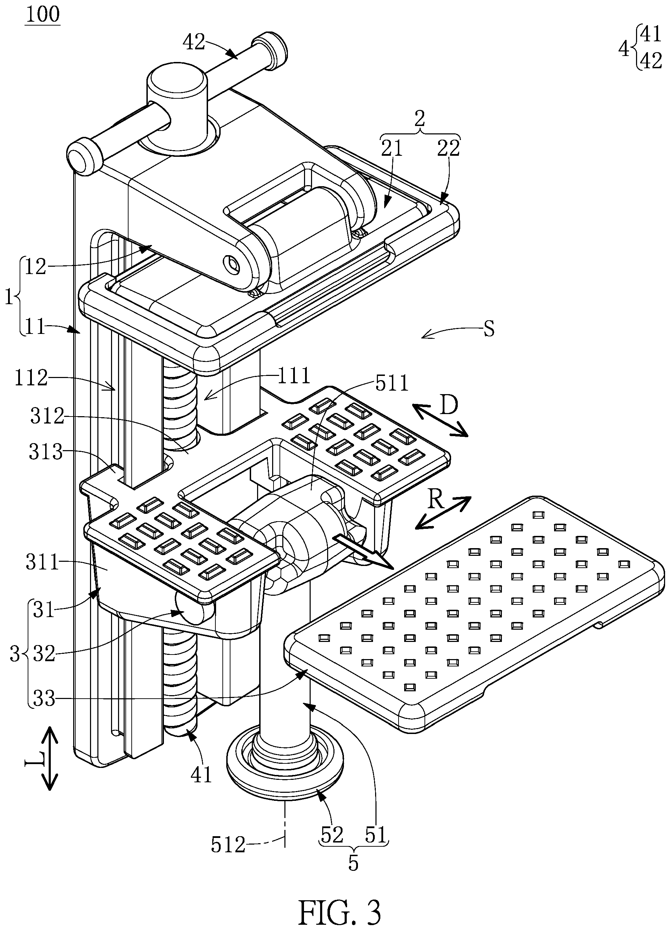

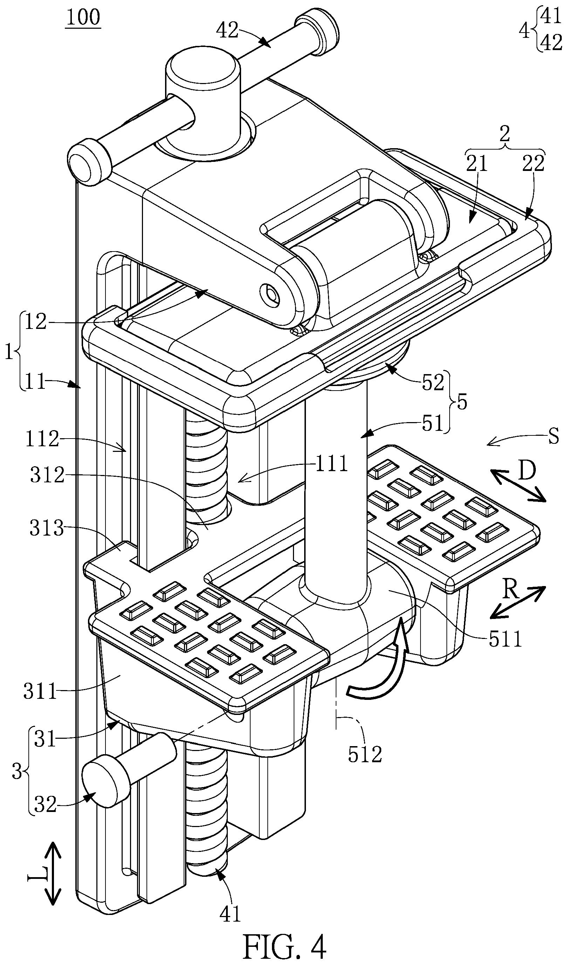

The supporting column 5 is movable relative to the lower clamp 3, so that the carrying device 100 is adjustable to be in a first clamping mode (shown in FIG. 4) or a second clamping mode (shown in FIG. 1). In the present embodiment, the supporting column 5 has a free end portion 52 and an assembling end portion 511 that is opposite to the free end portion 52 (i.e., the assembling end portion 511 is arranged away from the free end portion 52). Furthermore, the assembling end portion 511 is pivotally connected to the lower clamp 3 (e.g., the main portion 311 of the lower seat 31) along the shaft direction R, so that the supporting column 5 is rotatable relative to the lower clamp 3 for allowing the carrying device 100 to be in the first clamping mode or the second clamping mode. However, as shown in FIG. 3 and FIG. 4 of the present embodiment, the lower antiskid pad 33 needs to be removed from the lower seat 31, thereby allowing the supporting column 5 to rotate relative to the lower clamp 3, but the present disclosure is not limited thereto.

Specifically, as shown in FIG. 1, FIG. 2, and FIG. 5, the supporting column 5 includes a column portion 51 having the assembling end portion 511 arranged on one end thereof, and the free end portion 52 is an antiskid pad rotatably assembled to another end of the column portion 51. The column portion 51 defines a central axis 512, and the free end portion 52 is rotatable relative to a plane perpendicular to the central axis 512 within an angle range that is less than or equal to 10 degrees.

In summary, when the supporting column 5 is located in the receiving space S by being rotated relative to the lower clamp 3, the retainer 32 is configured to be inserted into the assembling end portion 511 of the supporting column 5 so that the supporting column 5 is held firmly in place, thereby allowing the carrying device 100 to stay firmly in the first clamping mode.

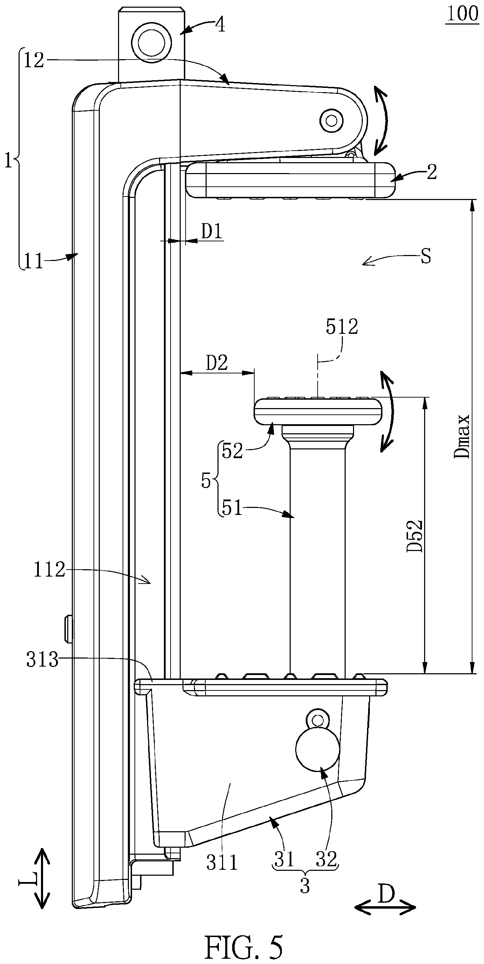

Specifically, as shown in FIG. 5 to FIG. 7, when the carrying device 100 is in the first clamping mode, the supporting column 5 is located in the receiving space S, the free end portion 52 of the supporting column 5 faces toward the upper clamp 2, and the manipulation mechanism 4 is configured to drive the lower clamp 3 and the supporting column 5 to move together, so that the free end portion 52 and the upper clamp 3 are capable of jointly clamping the plate part 301 of the first structure 300.

Moreover, when the carrying device 100 is in the first clamping mode, the supporting column 5 and the track structure 11 are spaced apart from each other along the depth direction D, so that a space between the supporting column 5 and the track structure 11 (e.g., the supporting column 5 and the track structure 11 are spaced apart from each other by a second reserved distance D2 greater than the first reserved distance D1) is configured to allow the extension part 302 of the first structure 300 to be disposed therein.

In summary, by moving the supporting column 5 into the receiving space S, the supporting column 5 and the upper clamp 2 of the carrying device 100 in the present embodiment can cooperate with each other to jointly clamp the first structure 300, so that a moving distance of the lower clamp 3 can be effectively decreased (e.g., the moving distance of the lower clamp 3 can be substantially decreased by a length of the supporting column 5), and a manipulation time of the manipulation mechanism 4 can be significantly reduced. Accordingly, the carrying device 100 provided by the present embodiment can be different from the existing structure.

Specifically, when the carrying device 100 provided by the present embodiment is in the first clamping mode, each of the upper clamp 2 and the free end portion 52 of the supporting column 5 is rotatable, so that the upper clamp 2 and the supporting column 5 can firmly clamp surfaces of the plate part 301 having different slanting angles.

Moreover, when the carrying device 100 provided by the present embodiment is in the first clamping mode, the space between the supporting column 5 and the track structure 11 (e.g., the supporting column 5 and the track structure 11 are spaced apart by the second reserved distance D2) is configured to allow the extension part 302 having a non-platy shape to be disposed therein, so that the carrying device 100 can be used to clamp variety structures.

In addition, the carrying device 100 being in the first clamping mode described in the present embodiment is operated to clamp the plate part 301 of the first structure 300, but the present disclosure is not limited thereto. For example, in other embodiments of the present disclosure, the carrying device 100 being in the first clamping mode can be operated to clamp the second structure 400.

It should be noted that when the carrying device 100 is in the first clamping mode, the lower clamp 3 shown in FIG. 1 of the present embodiment needs to remove the lower antiskid pad 33 from the lower seat 31, thereby allowing the supporting column 5 and the upper antiskid pad 22 of the upper clamp 2 to cooperate with each other for jointly clamping the plate part 301 of the first structure 300, but the present disclosure is not limited thereto.

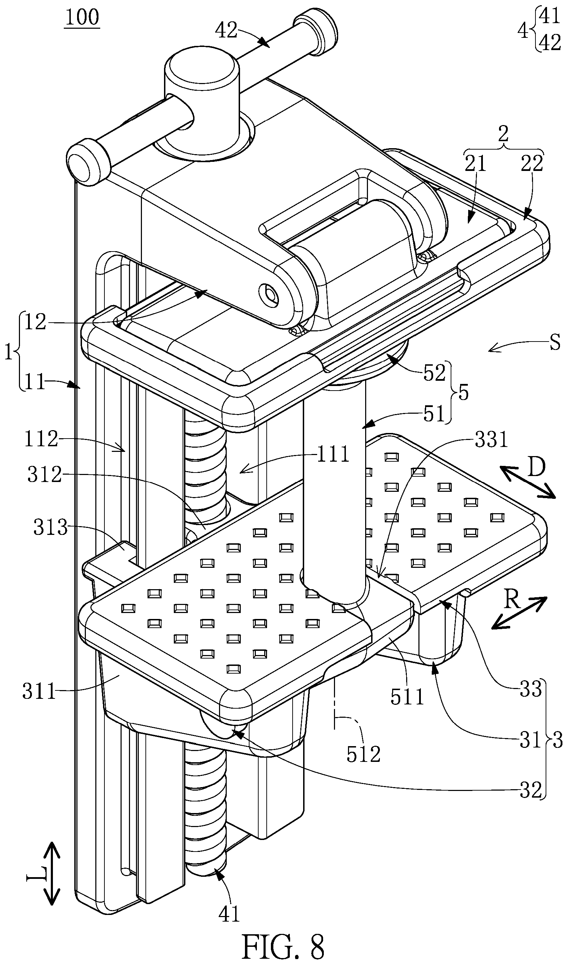

For example, as shown in FIG. 8, the lower antiskid pad 33 has a notch 331; in other words, the lower antiskid pad 33 is substantially in a U-shape. When the carrying device 100 is in the first clamping mode, the supporting column 5 passes through the notch 331 of the lower antiskid pad 33 without removing the lower antiskid pad 33 from the lower seat 31, thereby allowing the supporting column 5 and the upper antiskid pad 22 of the upper clamp 2 to cooperate with each other for jointly clamping the plate part 301 of the first structure 300 (not shown in FIG. 8).

In addition, as shown in FIG. 1, FIG. 2, and FIG. 9, when the retainer 32 is removed from the assembling end portion 511 of the supporting column 5, the supporting column 5 can be disposed outside of the receiving space S by being rotated relative to the lower clamp 3, so that the carrying device 100 can be adjusted in the second clamping mode.

Specifically, when the carrying device 100 is in the second clamping mode, the supporting column 5 is located outside of the receiving space S, the receiving space S is configured to receive the second structure 400 being plate-shaped, and the manipulation mechanism 4 is configured to drive the lower clamp 3 to move, so that the lower clamp 3 and the upper clamp 2 are capable of jointly clamping the second structure 400.

As shown in FIG. 5, when the carrying device 100 is in the first clamping mode and the lower clamp 3 is spaced apart from the upper clamp 2 by the maximum distance Dmax, a distance D52 between the free end portion 52 and the lower clamp 3 is 40% to 50% of the maximum distance Dmax.

In other words, as shown in FIG. 5, FIG. 7, and FIG. 9, a thickness of the plate part 301 of the first structure 300 capable of being clamped by the carrying device 100 being in the first clamping mode is less than a thickness of the second structure 400 capable of being clamped by the carrying device 100 being in the second clamping mode.

### [Second Embodiment]

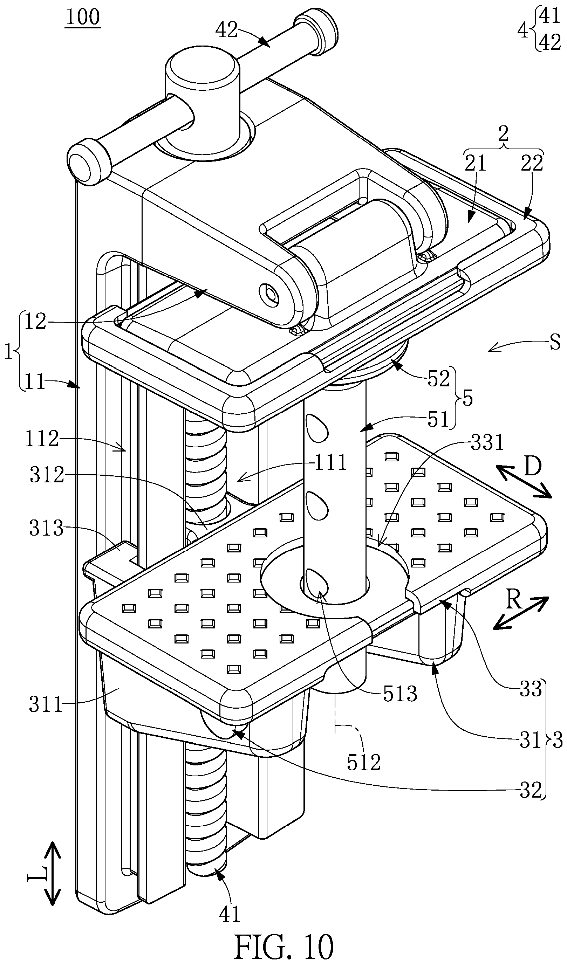

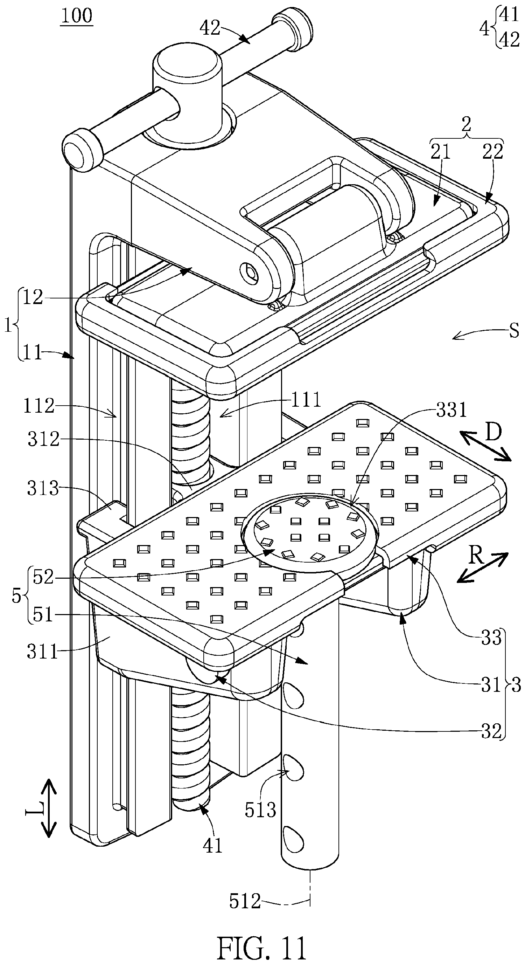

Referring to FIG. 10 and FIG. 11, a second embodiment of the present disclosure is provided, which is similar to the first embodiment of the present disclosure. For the sake of brevity, descriptions of the same components in the first and second embodiments of the present disclosure will be omitted herein, and the following description only discloses different features between the first and second embodiments (e.g., connection relationships and relative movement between the lower clamp 3 and the supporting column 5).

Specifically, the supporting column 5 in the present embodiment is assembled to the lower clamp 3 without using a pivotal connection manner. Furthermore, the column portion 51 of the supporting column 5 has a plurality of thru-holes 513 spaced apart from each other and arranged along the central axis 512, and the supporting column 5 in the present embodiment is linearly movable relative to the lower clamp 3 along a direction (e.g., the straight direction L) parallel to the track structure 11, but the present disclosure is not limited thereto.

Accordingly, when the supporting column 5 is located in the receiving space S by being linearly moved toward the upper clamp 2 relative to the lower clamp 3, the retainer 32 is configured to be inserted into the supporting column 5 (e.g., any one of the thru-holes 513) so as to enable the carrying device 100 to be in the first clamping mode (as shown in FIG. 10). Moreover, when the retainer 32 is removed from the supporting column 5, the supporting column 5 can be linearly moved away from the upper clamp 2 relative to the lower clamp 3 for being located outside of the receiving space S, so that the carrying device 100 can be adjusted in the second clamping mode (as shown in FIG. 11).

### [Third Embodiment]

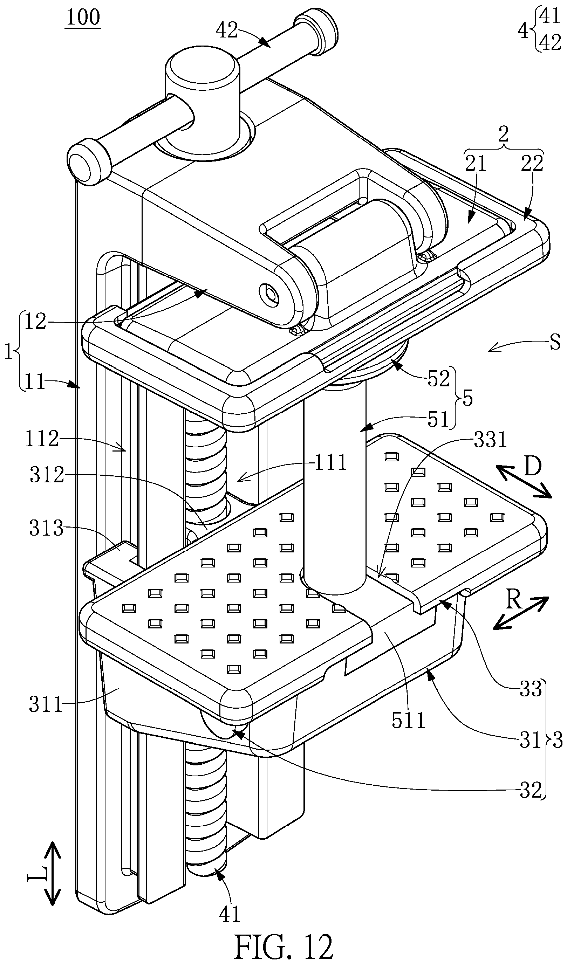

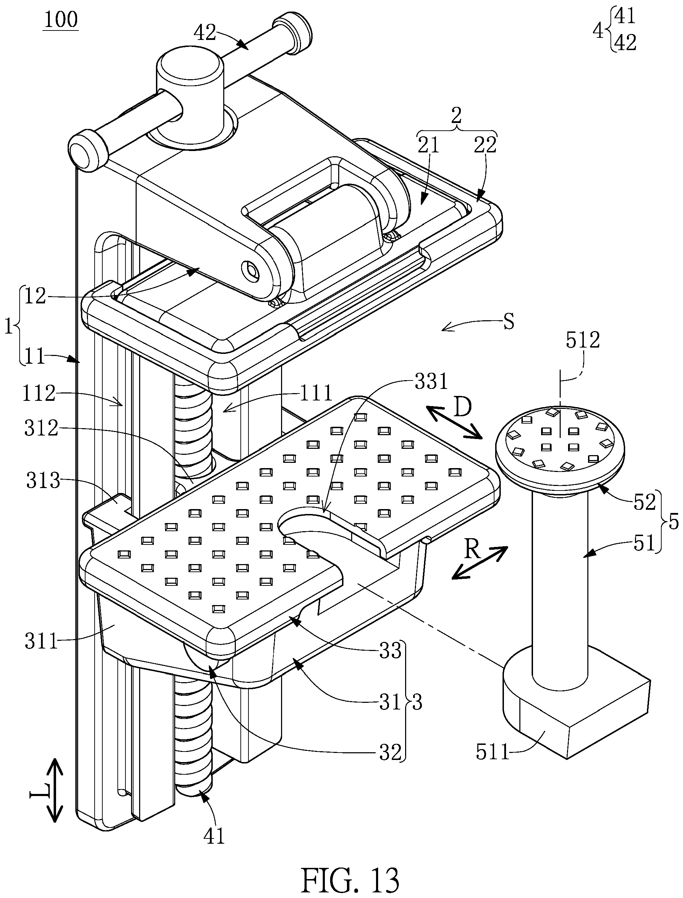

Referring to FIG. 12 and FIG. 13, a third embodiment of the present disclosure is provided, which is similar to the first embodiment of the present disclosure. For the sake of brevity, descriptions of the same components in the first and third embodiments of the present disclosure will be omitted herein, and the following description only discloses different features between the first and third embodiments (e.g., connection relationships and relative movement between the lower clamp 3 and the supporting column 5).

In the present embodiment, the supporting column 5 is detachably assembled to the lower clamp 3 (e.g., the main portion 311 of the lower seat 31) and is located in the receiving space S, and the free end portion 52 of the supporting column 5 faces toward the upper clamp 2, so that the carrying device 100 is in the first clamping mode (as shown in FIG. 12).

When the carrying device 100 is in the first clamping mode, the manipulation mechanism 4 is configured to drive the lower clamp 3 and the supporting column 5 to move together, so that the free end portion 52 and the upper clamp 2 are capable of jointly clamping the plate part 301 of the first structure 300. Furthermore, when the carrying device 100 is in the first clamping mode, the supporting column 5 and the track structure 11 are spaced apart from each other along the depth direction D, so that a space between the supporting column 5 and the track structure 11 is configured to allow the extension part 302 of the first structure 300 to be disposed therein.

When the supporting column 5 is detached from the lower clamp 3, the carrying device 100 is in the second clamping mode (as shown in FIG. 13), the receiving space S is configured to receive the second structure 400 being plate-shaped, and the manipulation mechanism 4 is configured to drive the lower clamp 3 to move, so that the lower clamp 3 and the upper clamp 2 are capable of jointly clamping the second structure 400.

It should be noted that when the carrying device 100 is in one of the first clamping mode and the second clamping mode, connection relationships of the components of the carrying device 100, the first structure 300, and the second structure 400 of the present embodiment are substantially identical to that of the first embodiment and will be omitted herein for the sake of brevity.

### [Beneficial Effects of the Embodiments]

In conclusion, by moving or assembling the supporting column into the receiving space, the supporting column and the upper clamp of the carrying device in the present disclosure can cooperate with each other to jointly clamp the first structure, so that a moving distance of the lower clamp can be effectively decreased (e.g., the moving distance of the lower clamp can be substantially decreased by a length of the supporting column), and a manipulation time of the manipulation mechanism can be significantly reduced. Accordingly, the carrying device provided by the present disclosure can be different from the existing structure.

Specifically, when the carrying device provided by the present disclosure is in the first clamping mode, the space between the supporting column and the track structure (e.g., the supporting column and the track structure are spaced apart from by the second reserved distance) is configured to allow the extension part having a non-platy shape to be disposed therein, so that the carrying device can be used to clamp a variety of structures. Moreover, each of the upper clamp and the free end portion of the supporting column is rotatable, so that the upper clamp and the supporting column can firmly clamp surfaces of the plate part having different slanting angles.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. A carrying device (100), comprising:
a stand (1) having a track structure (11) and configured to allow an object (200) to be detachably assembled thereon;
an upper clamp (2) connected to the stand (1);
a lower clamp (3) assembled to the track structure (11) and facing toward the upper clamp (2), wherein the lower clamp (3) is movable along the track structure (11) relative to the upper clamp (2), and the upper clamp (2) and the lower clamp (3) jointly define a receiving space (S) therebetween;
a manipulation mechanism (4) assembled to the stand (1) and interlinked with the lower clamp (3), wherein the manipulation mechanism (4) is configured to drive the lower clamp (3) to move along the track structure (11); and
a supporting column (5) assembled to the lower clamp (3), wherein the supporting column (5) is movable relative to the lower clamp (3), so that the carrying device (100) is adjustable to be in a first clamping mode or a second clamping mode;
wherein, when the carrying device (100) is in the first clamping mode, the supporting column (5) is located in the receiving space (S), a free end portion (52) of the supporting column (5) faces toward the upper clamp (2), and the manipulation mechanism (4) is configured to drive the lower clamp (3) and the supporting column (5) to move together, so that the free end portion (52) and the upper clamp (2) are capable of jointly clamping a plate part (301) of a first structure (300);
wherein, when the carrying device (100) is in the second clamping mode, the supporting column (5) is located outside of the receiving space (S), the receiving space (S) is configured to receive a second structure (400) being plate-shaped, and the manipulation mechanism (4) is configured to drive the lower clamp (3) to move, so that the lower clamp (3) and the upper clamp (2) are capable of jointly clamping the second structure (400), and wherein a thickness of the plate part (301) of the first structure (300) capable of being clamped by the carrying device (100) in the first clamping mode is less than a thickness of the second structure (400) capable of being clamped by the carrying device (100) in the second clamping mode.

2. The carrying device (100) according to claim 1, wherein, when the carrying device (100) is in the first clamping mode, the supporting column (5) and the track structure (11) are spaced apart from each other, so that a space between the supporting column (5) and the track structure (11) is configured to allow an extension part (302) of the first structure (300), which extends curvedly from the plate part (301), to be disposed therein.

3. The carrying device (100) according to claim 1, wherein the supporting column (5) has an assembling end portion (511) arranged away from the free end portion (52), and wherein the assembling end portion (511) is pivotally connected to the lower clamp (3) along a shaft direction (R) perpendicular to the track structure (11), so that the supporting column (5) is rotatable relative to the lower clamp (3).

4. The carrying device (100) according to claim 3, wherein the lower clamp (3) includes a lower seat (31) and a retainer (32) that is assembled to the lower seat (31), and the lower seat (31) is assembled to the track structure (11) and is interlinked with the manipulation mechanism (4), and wherein, when the supporting column (5) is located in the receiving space (S) by being rotated relative to the lower clamp (3), the retainer (32) is configured to be inserted into the assembling end portion (511) of the supporting column (5) so as to enable the carrying device (100) to be in the first clamping mode.

5. The carrying device (100) according to claim 4, wherein the lower clamp (3) includes a lower antiskid pad (33) assembled to the lower seat (31), and the lower antiskid pad (33) faces toward the upper clamp (2) and has a notch (331), and wherein, when the carrying device (100) is in the first clamping mode, the supporting column (5) passes through the notch (331) of the lower antiskid pad (33).

6. The carrying device (100) according to claim 1, wherein the lower clamp (3) is movable in a direction away from the upper clamp (2) through the manipulation mechanism (4) so as to enable the lower clamp (3) to be spaced apart from the upper clamp (2) by a maximum distance (Dmax), and wherein, when the carrying device (100) is in the first clamping mode and the lower clamp (3) is spaced apart from the upper clamp (2) by the maximum distance (Dmax), a distance (D52) between the free end portion (52) and the lower clamp (3) is 40% to 50% of the maximum distance (Dmax).

7. The carrying device (100) according to claim 1, wherein the supporting column (5) includes a column portion (51), and the free end portion (52) is an antiskid pad rotatably assembled to the column portion (51), and wherein the column portion (51) defines a central axis (512), and the free end portion (52) is rotatable relative to a plane perpendicular to the central axis (512) in an angle range that is less than or equal to 10 degrees.

8. The carrying device (100) according to claim 1, wherein the upper clamp (2) includes an upper seat (21) and an upper antiskid pad (22) that is assembled to the upper seat (21), wherein the upper seat (21) is pivotally connected to the stand (1) along a shaft direction (R) perpendicular to the track structure (11), and the upper antiskid pad (22) faces toward the lower clamp (3), wherein the lower clamp (3) includes a lower seat (31) and a lower antiskid pad (33) that is assembled to the lower seat (31), wherein the lower seat (31) is assembled to the track structure (11) and is interlinked with the manipulation mechanism (4), and the lower antiskid pad (33) faces toward the upper antiskid pad (22), wherein the manipulation mechanism (4) includes a screw rod (41) and a manipulation rod (42) that is connected to the screw rod (41), and wherein the screw rod (41) passes through the stand (1) and is screwed to the lower seat (31), and the manipulation rod (42) is configured to rotate the screw rod (41) so as to allow the lower seat (31) to move along the track structure (11).

9. The carrying device (100) according to claim 1, wherein the supporting column (5) is linearly movable relative to the lower clamp (3) along a direction parallel to the track structure (11), the lower clamp (3) includes a lower seat (31) and a retainer (32) that is assembled to the lower seat (31), and the lower seat (31) is assembled to the track structure (11) and is interlinked with the manipulation mechanism (4), and wherein, when the supporting column (5) is located in the receiving space (S) by being linearly moved relative to the lower clamp (3), the retainer (32) is configured to be inserted into the supporting column (5) so as to enable the carrying device (100) to be in the first clamping mode.

10. A carrying device (100), comprising:
a stand (1) having a track structure (11) and configured to allow an object (200) to be detachably assembled thereon;
an upper clamp (2) connected to the stand (1);
a lower clamp (3) assembled to the track structure (11) and facing toward the upper clamp (2), wherein the lower clamp (3) is movable along the track structure (11) relative to the upper clamp (2), and the upper clamp (2) and the lower clamp (3) jointly define a receiving space (S) therebetween;
a manipulation mechanism (4) assembled to the stand (1) and interlinked with the lower clamp (3), wherein the manipulation mechanism (4) is configured to drive the lower clamp (3) to move along the track structure (11); and
a supporting column (5), wherein the supporting column (5) is detachably assembled to the lower clamp (3) and is located in the receiving space (S), so that the carrying device (100) is in a first clamping mode, wherein a free end portion (52) of the supporting column (5) faces toward the upper clamp (2), and the manipulation mechanism (4) is configured to drive the lower clamp (3) and the supporting column (5) to move together, so that the free end portion (52) and the upper clamp (2) are capable of jointly clamping a plate part (301) of a first structure (300);
when the supporting column (5) is detached from the lower clamp (3), the carrying device (100) is in a second clamping mode, the receiving space (S) is configured to receive a second structure (400) being plate-shaped, and the manipulation mechanism (4) is configured to drive the lower clamp (3) to move, so that the lower clamp (3) and the upper clamp (2) are capable of jointly clamping the second structure (400);
wherein a thickness of the plate part (301) of the first structure (300) capable of being clamped by the carrying device (100) being in the first clamping mode is less than a thickness of the second structure (400) capable of being clamped by the carrying device (100) being in the second clamping mode.

11. The carrying device (100) according to claim 10, wherein the supporting column (5) and the track structure (11) are spaced apart from each other, so that a space between the supporting column (5) and the track structure (11) is configured to allow an extension part (302) of the first structure (300), which extends curvedly from the plate part (301) to be disposed therein, and wherein.

12. The carrying device (100) according to claim 10, wherein the lower clamp (3) is movable in a direction away from the upper clamp (2) through the manipulation mechanism (4) so as to enable the lower clamp (3) to be spaced apart from the upper clamp (2) by a maximum distance (Dmax), and wherein, when the carrying device (100) is in the first clamping mode and the lower clamp (3) is spaced apart from the upper clamp (2) by the maximum distance (Dmax), a distance (D52) between the free end portion (52) and the lower clamp (3) is 40% to 50% of the maximum distance (Dmax).

13. The carrying device (100) according to claim 10, wherein the supporting column (5) includes a column portion (51), and the free end portion (52) is an antiskid pad rotatably assembled to the column portion (51), and wherein the free end portion (52) is rotatable relative to a plane perpendicular to a central axis (512) of the column portion (51) in an angle range that is less than or equal to 10 degrees.

## Patentansprüche

1. Tragende Vorrichtung (100), aufweisend:
einen Ständer (1), welcher eine Schienenstruktur (11) hat und konfiguriert ist, um es einem Objekt (200) zu ermöglichen, abnehmbar daran montiert zu sein;
eine obere Klemme (2), welche mit dem Ständer (1) verbunden ist;
eine untere Klemme (3), welche an der Schienenstruktur (11) angebracht ist und der oberen Klemme (2) zugewandt ist, wobei die untere Klemme (3) entlang der Schienenstruktur (11) relativ zu der oberen Klemme (2) bewegbar ist, und wobei die obere Klemme (2) und die untere Klemme (3) gemeinsam einen Aufnahmeraum (S) dazwischen definieren;
einen Betätigungsmechanismus (4), welcher an dem Ständer (1) angebracht ist und mit der unteren Klemme (3) ineinandergreifend verbunden ist, wobei der Betätigungsmechanismus (4) konfiguriert ist, um die untere Klemme (3) anzutreiben, um sich entlang der Schienenstruktur (11) zu bewegen; und
eine Stützsäule (5), welche an der unteren Klemme (3) angebracht ist, wobei die Stützsäule (5) relativ zu der unteren Klemme (3) bewegbar ist, so dass die tragende Vorrichtung (100) einstellbar ist, um sich in einem ersten Klemmmodus oder einem zweiten Klemmmodus zu befinden;
wobei, wenn sich die tragende Vorrichtung (100) in dem ersten Klemmmodus befindet, sich die Stützsäule (5) in dem Aufnahmeraum (S) befindet, ein Freies-Ende-Abschnitt (52) der Stützsäule (5) der oberen Klemme (2) zugewandt ist, und der Betätigungsmechanismus (4) konfiguriert ist, um die untere Klemme (3) und die Stützsäule (5) anzutreiben, um sich gemeinsam zu bewegen, so dass der Freies-Ende-Abschnitt (52) und die obere Klemme (2) dazu in der Lage sind, einen Plattenteil (301) einer ersten Struktur (300) gemeinsam zu klemmen;
wobei, wenn sich die tragende Vorrichtung (100) in dem zweiten Klemmmodus befindet, sich die Stützsäule (5) außerhalb von dem Aufnahmeraum (S) befindet, der Aufnahmeraum (S) konfiguriert ist, um eine zweite Struktur (400) aufzunehmen, welche plattenförmig ist, und der Betätigungsmechanismus (4) konfiguriert ist, um die untere Klemme (3) anzutreiben, um sich zu bewegen, so dass die untere Klemme (3) und die obere Klemme (2) dazu in der Lage sind, die zweite Struktur (400) gemeinsam zu klemmen, und wobei eine Dicke des Plattenteils (301) der ersten Struktur (300), welche dazu in der Lage ist, mittels der tragenden Vorrichtung (100) in dem ersten Klemmmodus geklemmt zu werden, geringer ist als eine Dicke der zweiten Struktur (400), welche dazu in der Lage ist, mittels der tragenden Vorrichtung (100) in dem zweiten Klemmmodus geklemmt zu werden.

2. Tragende Vorrichtung (100) gemäß Anspruch 1, wobei, wenn sich die tragende Vorrichtung (100) in dem ersten Klemmmodus befindet, die Stützsäule (5) und die Schienenstruktur (11) voneinander beabstandet sind, so dass ein Raum zwischen der Stützsäule (5) und der Schienenstruktur (11) konfiguriert ist, um es einem Verlängerungsteil (302) der ersten Struktur (300), welcher sich in gekrümmter Weise von dem Plattenteil (301) aus erstreckt, zu ermöglichen, darin angeordnet zu sein.

3. Tragende Vorrichtung (100) gemäß Anspruch 1, wobei die Stützsäule (5) einen Montage-Ende-Abschnitt (511) hat, welcher von dem Freies-Ende-Abschnitt (52) entfernt angeordnet ist, und wobei der Montage-Ende-Abschnitt (511) mit der unteren Klemme (3) entlang einer Wellenrichtung (R) schwenkbar verbunden ist, welche senkrecht zu der Schienenstruktur (11) ist, so dass die Stützsäule (5) relativ zu der unteren Klemme (3) drehbar ist.

4. Tragende Vorrichtung (100) gemäß Anspruch 3, wobei die untere Klemme (3) eine untere Aufnahmevorrichtung (31) und eine Haltevorrichtung (32) aufweist, welche an der unteren Aufnahmevorrichtung (31) angebracht ist, und wobei die untere Aufnahmevorrichtung (31) an der Schienenstruktur (11) angebracht ist und mit dem Betätigungsmechanismus (4) ineinandergreifend verbunden ist, und wobei, wenn sich die Stützsäule (5) in dem Aufnahmeraum (S) befindet, indem sie relativ zu der unteren Klemme (3) gedreht ist, die Haltevorrichtung (32) konfiguriert ist, um in den Montage-Ende-Abschnitt (511) der Stützsäule (5) hinein eingeführt zu sein, um es der tragenden Vorrichtung (100) zu ermöglichen, sich in dem ersten Klemm-Modus zu befinden.

5. Tragende Vorrichtung (100) gemäß Anspruch 4, wobei die untere Klemme (3) ein unteres Antirutschpad (33) aufweist, welches an der unteren Aufnahmevorrichtung (31) angebracht ist, und wobei das untere Antirutschpad (33) der oberen Klemme (2) zugewandt ist und eine Aussparung (331) aufweist, und wobei, wenn sich die tragende Vorrichtung (100) in dem ersten Klemmmodus befindet, die Stützsäule (5) durch die Aussparung (331) des unteren Antirutschpolsters (33) hindurchgeht.

6. Tragende Vorrichtung (100) gemäß Anspruch 1, wobei die untere Klemme (3) in einer Richtung weg von der oberen Klemme (2) bewegbar ist durch den Betätigungsmechanismus (4), um es der unteren Klemme (3) zu ermöglichen, von der oberen Klemme (2) um einen maximalen Abstand (Dmax) beabstandet zu sein, und wobei, wenn sich die tragende Vorrichtung (100) in dem ersten Klemmmodus befindet und die untere Klemme (3) von der oberen Klemme (2) um den maximalen Abstand (Dmax) beabstandet ist, ein Abstand (D52) zwischen dem Freies-Ende-Abschnitt (52) und der unteren Klemme (3) 40% bis 50% des maximalen Abstands (Dmax) beträgt.

7. Tragende Vorrichtung (100) gemäß Anspruch 1, wobei die Stützsäule (5) einen Säulenabschnitt (51) aufweist, und der Freies-Ende-Abschnitt (52) ein Antirutschpad ist, welches drehbar an dem Säulenabschnitt (51) angebracht ist, und wobei der Säulenabschnitt (51) eine Mittelachse (512) definiert, und der Freies-Ende-Abschnitt (52) relativ zu einer Ebene, welche senkrecht zu der Mittelachse (512) ist, in einem Winkelbereich drehbar ist, welcher kleiner als oder gleich 10 Grad ist.

8. Tragende Vorrichtung (100) gemäß Anspruch 1, wobei die obere Klemme (2) eine obere Aufnahmevorrichtung (21) und ein oberes Antirutschpad (22) aufweist, welches an der oberen Aufnahmevorrichtung (21) angebracht ist, wobei die obere Aufnahmevorrichtung (21) mit dem Ständer (1) entlang einer Wellenrichtung (R) schwenkbar verbunden ist, welche senkrecht zu der Schienenstruktur (11) ist, und wobei das obere Antirutschpad (22) der unteren Klemme (3) zugewandt ist, wobei die untere Klemme (3) eine untere Aufnahmevorrichtung (31) und ein unteres Antirutschpad (33) aufweist, welches an der unteren Aufnahmevorrichtung (31) angebracht ist, wobei die untere Aufnahmevorrichtung (31) an der Schienenstruktur (11) angebracht ist und mit dem Betätigungsmechanismus (4) ineinandergreifend verbunden ist, und wobei das untere Antirutschpad (33) dem oberen Antirutschpad (22) zugewandt ist, wobei der Betätigungsmechanismus (4) eine Gewindestange (41) und eine Betätigungsstange (42) aufweist, welche mit der Gewindestange (41) verbunden ist, und wobei die Gewindestange (41) durch den Ständer (1) hindurchgeht und mit der unteren Aufnahmevorrichtung (31) verschraubt ist, und wobei die Betätigungsstange (42) konfiguriert ist, um die Gewindestange (41) zu drehen, um es der unteren Aufnahmevorrichtung (31) zu ermöglichen, sich entlang der Schienenstruktur (11) zu bewegen.

9. Tragende Vorrichtung (100) gemäß Anspruch 1, wobei die Stützsäule (5) linear bewegbar ist relativ zu der unteren Klemme (3) entlang einer Richtung, welche parallel zu der Schienenstruktur (11) ist, wobei die untere Klemme (3) eine untere Aufnahmevorrichtung (31) und eine Haltevorrichtung (32) aufweist, welche an der unteren Aufnahmevorrichtung (31) angebracht ist, und wobei die untere Aufnahmevorrichtung (31) an der Schienenstruktur (11) angebracht ist und mit dem Betätigungsmechanismus (4) ineinandergreifend verbunden ist, und wobei, wenn sich die Stützsäule (5) in dem Aufnahmeraum (S) befindet, indem sie linear relativ zu der unteren Klemme (3) bewegt wird, die Haltevorrichtung (32) konfiguriert ist, um in die Stützsäule (5) hinein eingeführt zu werden, um es der tragenden Vorrichtung (100) zu ermöglichen, sich in dem ersten Klemmmodus zu befinden.

10. Tragende Vorrichtung (100), aufweisend:
einen Ständer (1), welcher eine Schienenstruktur (11) hat und konfiguriert ist, um es einem Objekt (200) zu ermöglichen, abnehmbar daran montiert zu sein;
eine obere Klemme (2), welche mit dem Ständer (1) verbunden ist;
eine untere Klemme (3), welche an der Schienenstruktur (11) angebracht ist und der oberen Klemme (2) zugewandt ist, wobei die untere Klemme (3) entlang der Schienenstruktur (11) relativ zu der oberen Klemme (2) bewegbar ist, und die obere Klemme (2) und die untere Klemme (3) gemeinsam einen Aufnahmeraum (S) dazwischen definieren;
einen Betätigungsmechanismus (4), welcher an dem Ständer (1) angebracht ist und mit der unteren Klemme (3) ineinandergreifend verbunden ist, wobei der Betätigungsmechanismus (4) konfiguriert ist, um die untere Klemme (3) anzutreiben, um sich entlang der Schienenstruktur (11) zu bewegen; und
eine Stützsäule (5), wobei die Stützsäule (5) abnehmbar an der unteren Klemme (3) angebracht ist und sich in dem Aufnahmeraum (S) befindet, so dass sich die tragende Vorrichtung (100) in einem ersten Klemmmodus befindet, wobei ein Freies-Ende-Abschnitt (52) der Stützsäule (5) der oberen Klemme (2) zugewandt ist, und wobei der Betätigungsmechanismus (4) konfiguriert ist, um die untere Klemme (3) und die Stützsäule (5) anzutreiben, um sich gemeinsam zu bewegen, so dass der Freies-Ende-Abschnitt (52) und die obere Klemme (2) dazu in der Lage sind, gemeinsam einen Plattenteil (301) einer ersten Struktur (300) zu klemmen;
wobei, wenn die Stützsäule (5) von der unteren Klemme (3) getrennt ist, sich die tragende Vorrichtung (100) in einem zweiten Klemmmodus befindet, der Aufnahmeraum (S) konfiguriert ist, um eine zweite Struktur (400) aufzunehmen, welche plattenförmig ist, und der Betätigungsmechanismus (4) konfiguriert ist, um die untere Klemme (3) anzutreiben, um sich zu bewegen, so dass die untere Klemme (3) und die obere Klemme (2) dazu in der Lage sind, die zweite Struktur (400) gemeinsam zu klemmen;
wobei eine Dicke des Plattenteils (301) der ersten Struktur (300), welche dazu in der Lage ist, mittels der tragenden Vorrichtung (100), welche sich in dem ersten Klemmmodus befindet, geklemmt zu werden, geringer ist als eine Dicke der zweiten Struktur (400), welche dazu in der Lage ist, mittels der tragenden Vorrichtung (100), welche sich in dem zweiten Klemmmodus befindet, geklemmt zu werden.

11. Tragende Vorrichtung (100) gemäß Anspruch 10, wobei die Stützsäule (5) und die Schienenstruktur (11) voneinander beabstandet sind, so dass ein Raum zwischen der Stützsäule (5) und der Schienenstruktur (11) konfiguriert ist, um es einem Verlängerungsteil (302) der ersten Struktur (300), welcher sich in gekrümmter Weise von dem Plattenteil (301) aus erstreckt, zu ermöglichen, darin angeordnet zu sein, und wobei.

12. Tragende Vorrichtung (100) gemäß Anspruch 10, wobei die untere Klemme (3) in einer Richtung weg von der oberen Klemme (2) durch den Betätigungsmechanismus (4) bewegbar ist, um es der unteren Klemme (3) zu ermöglichen, von der oberen Klemme (2) um einen maximalen Abstand (Dmax) beabstandet zu sein, und wobei, wenn sich die tragende Vorrichtung (100) in dem ersten Klemmmodus befindet und die untere Klemme (3) von der oberen Klemme (2) um den maximalen Abstand (Dmax) beabstandet ist, ein Abstand (D52) zwischen dem Freies-Ende-Abschnitt (52) und der unteren Klemme (3) 40% bis 50% des maximalen Abstands (Dmax) beträgt.

13. Tragende Vorrichtung (100) gemäß Anspruch 10, wobei die Stützsäule (5) einen Säulenabschnitt (51) aufweist, und der Freies-Ende-Abschnitt (52) ein Antirutschpad ist, welches drehbar an dem Säulenabschnitt (51) angebracht ist, und wobei der Freies-Ende-Abschnitt (52) relativ zu einer Ebene, welche senkrecht zu einer Mittelachse (512) des Säulenabschnitts (51) ist, in einem Winkelbereich drehbar ist, welcher kleiner als oder gleich 10 Grad ist.

## Revendications

1. Dispositif porteur (100), comprenant :
un bâti (1) ayant une structure de rail (11) et configuré pour permettre à un objet (200) d'être assemblé de manière amovible sur celui-ci ;
une pince supérieure (2) connectée au bâti (1) ;
une pince inférieure (3) assemblée à la structure de rail (11) et faisant face vers la pince supérieure (2), où la pince inférieure (3) est mobile le long de la structure de rail (11) par rapport à la pince supérieure (2), et la pince supérieure (2) et la pince inférieure (3) définissent conjointement un espace de réception (S) entre elles ;
un mécanisme de manipulation (4) assemblé au bâti (1) et connecté à la pince inférieure (3), dans lequel le mécanisme de manipulation (4) est configuré pour entraîner la pince inférieure (3) à se déplacer le long de la structure de rail (11) ; et
une colonne de support (5) assemblée à la pince inférieure (3), où la colonne de support (5) est mobile par rapport à la pince inférieure (3), de sorte que le dispositif porteur (100) est réglable pour être dans un premier mode de serrage ou un deuxième mode de serrage ;
dans lequel, lorsque le dispositif porteur (100) est dans le premier mode de serrage, la colonne de support (5) est située dans l'espace de réception (S), une partie d'extrémité libre (52) de la colonne de support (5) fait face vers la pince supérieure (2), et le mécanisme de manipulation (4) est configuré pour entraîner la pince inférieure (3) et la colonne de support (5) à se déplacer ensemble, de sorte que la partie d'extrémité libre (52) et la pince supérieure (2) sont capables de serrer conjointement une partie de plaque (301) d'une première structure (300) ;
dans lequel, lorsque le dispositif porteur (100) est dans le deuxième mode de serrage, la colonne de support (5) est située à l'extérieur de l'espace de réception (S), l'espace de réception (S) est configuré pour recevoir une deuxième structure (400) ayant une forme de plaque, et le mécanisme de manipulation (4) est configuré pour entraîner la pince inférieure (3) à se déplacer, de sorte que la pince inférieure (3) et la pince supérieure (2) sont capables de serrer conjointement la deuxième structure (400), et dans lequel une épaisseur de la partie de plaque (301) de la première structure (300) capable d'être serrée par le dispositif porteur (100) dans le premier mode de serrage est inférieure à une épaisseur de la deuxième structure (400) capable d'être serrée par le dispositif porteur (100) dans le deuxième mode de serrage.

2. Dispositif porteur (100) selon la revendication 1, dans lequel, lorsque le dispositif porteur (100) est dans le premier mode de serrage, la colonne de support (5) et la structure de rail (11) sont espacées l'une de l'autre, de sorte qu'un espace entre la colonne de support (5) et la structure de rail (11) est configuré pour permettre à une partie d'extension (302) de la première structure (300), qui s'étend de manière incurvée à partir de la partie de plaque (301), d'être disposée à l'intérieur de celle-ci.

3. Dispositif porteur (100) selon la revendication 1, dans lequel la colonne de support (5) a une partie d'extrémité d'assemblage (511) disposée à l'écart de la partie d'extrémité libre (52), et dans lequel la partie d'extrémité d'assemblage (511) est connectée de manière pivotante à la pince inférieure (3) le long d'une direction d'arbre (R) perpendiculaire à la structure de rail (11), de sorte que la colonne de support (5) est rotative par rapport à la pince inférieure (3).

4. Dispositif porteur (100) selon la revendication 3, dans lequel la pince inférieure (3) comprend un siège inférieur (31) et un dispositif de retenue (32) qui est assemblé au siège inférieur (31), et le siège inférieur (31) est assemblé à la structure de rail (11) et est connecté au mécanisme de manipulation (4), et dans lequel, lorsque la colonne de support (5) est située dans l'espace de réception (S) en étant tournée par rapport à la pince inférieure (3), le dispositif de retenue (32) est configuré pour être inséré dans la partie d'extrémité d'assemblage (511) de la colonne de support (5) de manière à permettre au dispositif porteur (100) d'être dans le premier mode de serrage.

5. Dispositif porteur (100) selon la revendication 4, dans lequel la pince inférieure (3) comprend un coussin antidérapant inférieur (33) assemblé au siège inférieur (31), et le coussin antidérapant inférieur (33) fait face vers la pince supérieure (2) et présente une encoche (331), et dans lequel, lorsque le dispositif porteur (100) est dans le premier mode de serrage, la colonne de support (5) passe à travers l'encoche (331) du coussin antidérapant inférieur (33) .

6. Dispositif porteur (100) selon la revendication 1, dans lequel la pince inférieure (3) est mobile dans une direction éloignée de la pince supérieure (2) par l'intermédiaire du mécanisme de manipulation (4) de manière à permettre à la pince inférieure (3) d'être espacée de la pince supérieure (2) d'une distance maximale (Dmax), et dans lequel, lorsque le dispositif porteur (100) est dans le premier mode de serrage et que la pince inférieure (3) est espacée de la pince supérieure (2) de la distance maximale (Dmax), une distance (D52) entre la partie d'extrémité libre (52) et la pince inférieure (3) est de 40 % à 50 % de la distance maximale (Dmax).

7. Dispositif porteur (100) selon la revendication 1, dans lequel la colonne de support (5) comprend une partie de colonne (51), et la partie d'extrémité libre (52) est un coussin antidérapant assemblé de manière rotative à la partie de colonne (51), et dans lequel la partie de colonne (51) définit un axe central (512), et la partie d'extrémité libre (52) est rotative par rapport à un plan perpendiculaire à l'axe central (512) dans une plage d'angle qui est inférieure ou égale à 10 degrés.

8. Dispositif porteur (100) selon la revendication 1, dans lequel la pince supérieure (2) comprend un siège supérieur (21) et un coussin antidérapant supérieur (22) qui est assemblé au siège supérieur (21), dans lequel le siège supérieur (21) est connecté de manière pivotante au bâti (1) le long d'une direction d'arbre (R) perpendiculaire à la structure de rail (11), et le coussin antidérapant supérieur (22) fait face vers la pince inférieure (3), dans lequel la pince inférieure (3) comprend un siège inférieur (31) et un coussin antidérapant inférieur (33) qui est assemblé au siège inférieur (31), dans lequel le siège inférieur (31) est assemblé à la structure de rail (11) et est connecté au mécanisme de manipulation (4), et le coussin antidérapant inférieur (33) fait face vers le coussin antidérapant supérieur (22), dans lequel le mécanisme de manipulation (4) comprend une tige filetée (41) et une tige de manipulation (42) qui est connectée à la tige filetée (41), et dans lequel la tige filetée (41) traverse le bâti (1) et est vissée au siège inférieur (31), et la tige de manipulation (42) est configurée pour faire tourner la tige filetée (41) de manière à permettre au siège inférieur (31) de se déplacer le long de la structure de rail (11).

9. Dispositif porteur (100) selon la revendication 1, dans lequel la colonne de support (5) est mobile linéairement par rapport à la pince inférieure (3) le long d'une direction parallèle à la structure de rail (11), la pince inférieure (3) comprend un siège inférieur (31) et un dispositif de retenue (32) qui est assemblé au siège inférieur (31), et le siège inférieur (31) est assemblé à la structure de rail (11) et est connecté au mécanisme de manipulation (4), et dans lequel, lorsque la colonne de support (5) est située dans l'espace de réception (S) en étant déplacée linéairement par rapport à la pince inférieure (3), le dispositif de retenue (32) est configuré pour être inséré dans la colonne de support (5) de manière à permettre au dispositif porteur (100) d'être dans le premier mode de serrage.

10. Dispositif porteur (100), comprenant :
un bâti (1) ayant une structure de rail (11) et configuré pour permettre à un objet (200) d'être assemblé de manière amovible sur celui-ci ;
une pince supérieure (2) connectée au bâti (1) ;
une pince inférieure (3) assemblée à la structure de rail (11) et faisant face vers la pince supérieure (2), où la pince inférieure (3) est mobile le long de la structure de rail (11) par rapport à la pince supérieure (2), et la pince supérieure (2) et la pince inférieure (3) définissent conjointement un espace de réception (S) entre elles ;
un mécanisme de manipulation (4) assemblé au bâti (1) et connecté à la pince inférieure (3), dans lequel le mécanisme de manipulation (4) est configuré pour entraîner la pince inférieure (3) à se déplacer le long de la structure de rail (11) ; et
une colonne de support (5), où la colonne de support (5) est assemblée de manière amovible à la pince inférieure (3) et est située dans l'espace de réception (S), de sorte que le dispositif porteur (100) est dans un premier mode de serrage, où une partie d'extrémité libre (52) de la colonne de support fait face vers la pince supérieure (3), et le mécanisme de manipulation (4) est configuré pour entraîner la pince inférieure (3) et la colonne de support (5) à se déplacer ensemble, de sorte que la partie d'extrémité libre (52) et la pince supérieure (2) sont capables de serrer conjointement une partie de plaque (301) d'une première structure (300) ;
lorsque la colonne de support (5) est détachée de la pince inférieure (3), le dispositif porteur (100) est dans un deuxième mode de serrage, l'espace de réception (S) est configuré pour recevoir une deuxième structure (400) ayant une forme de plaque, et le mécanisme de manipulation (4) est configuré pour entraîner la pince inférieure (3) à se déplacer, de sorte que la pince inférieure (3) et la pince supérieure (2) sont capables de serrer conjointement la deuxième structure (400) ;
dans lequel une épaisseur de la partie de plaque (301) de la première structure (300) capable d'être serrée par le dispositif porteur (100) étant dans le premier mode de serrage est inférieure à une épaisseur de la deuxième structure (400) capable d'être serrée par le dispositif porteur (100) étant dans le deuxième mode de serrage.

11. Dispositif porteur (100) selon la revendication 10, dans lequel la colonne de support (5) et la structure de rail (11) sont espacées l'une de l'autre, de sorte qu'un espace entre la colonne de support (5) et la structure de rail (11) est configuré pour permettre à une partie d'extension (302) de la première structure (300), qui s'étend de manière incurvée à partir de la partie de plaque (301), d'être disposée dans celui-ci, et dans lequel.

12. Dispositif porteur (100) selon la revendication 10, dans lequel la pince inférieure (3) est mobile dans une direction éloignée de la pince supérieure (2) par l'intermédiaire du mécanisme de manipulation (4) de manière à permettre à la pince inférieure (3) d'être espacée de la pince supérieure (2) d'une distance maximale (Dmax), et dans lequel, lorsque le dispositif porteur (100) est dans le premier mode de serrage et que la pince inférieure (3) est espacée de la pince supérieure (2) de la distance maximale (Dmax), une distance (D52) entre la partie d'extrémité libre (52) et la pince inférieure (3) est de 40 % à 50 % de la distance maximale (Dmax).

13. Dispositif porteur (100) selon la revendication 10, dans lequel la colonne de support (5) comprend une partie de colonne (51), et la partie d'extrémité libre (52) est un coussin antidérapant assemblé de manière rotative à la partie de colonne (51), et dans lequel la partie d'extrémité libre (52) est rotative par rapport à un plan perpendiculaire à un axe central (512) de la partie de colonne (51) dans une plage d'angle qui est inférieure ou égale à 10 degrés.
